# EUROPÄISCHE PATENTSCHRIFT

(11) **EP 4 310 260 B1**
(45) Veröffentlichungstag und Bekanntmachung des Hinweises auf die Patenterteilung: **25.03.2026**
(21) Anmeldenummer: 23173516.8
(22) Anmeldetag: 16.05.2023
(51) Int. Cl.: E02F 3/36

(54) **SCHNELLWECHSLER UND SCHNELLWECHSELSYSTEM MIT EINEM DERARTIGEN SCHNELLWECHSLER**
QUICK CHANGER AND QUICK CHANGE SYSTEM COMPRISING SUCH A QUICK CHANGER
DISPOSITIF DE CHANGEMENT RAPIDE ET SYSTÈME DE CHANGEMENT RAPIDE DOTÉ D'UN TEL DISPOSITIF DE CHANGEMENT RAPIDE

(30) Priorität: 19.07.2022 DE 102022117974
(43) Veröffentlichungstag der Anmeldung: 24.01.2024
(73) Patentinhaber: OilQuick Deutschland KG, 82297 Steindorf (DE)
(72) Erfinder: Schauer, Stefan, 86438 Kissing (DE); Kollmann, Michael, 86492 Egling an der Paar (DE)
(74) Vertreter: Charrier Rapp & Liebau

(56) Entgegenhaltungen:
- EP-A1- 3 922 774
- US-A- 6 058 633
- US-A1- 2020 399 853
- US-A1- 2021 238 824

## Beschreibung

Die Erfindung betrifft einen Schnellwechsler nach dem Oberbegriff des Anspruchs 1. Die Erfindung betrifft außerdem ein Schnellwechselsystem mit einem derartigen Schnellwechsler und einem zugehörigen Adapter.

Solche Schnellwechsler werden zum einfachen und bequemen Wechseln von unterschiedlichen Anbaugeräten an Baumaschinen eingesetzt. Mit einem derartigen Schnellwechsler können z.B. Schwenklöffel, Greifer, Scheren, Verdichter, Magnete, Hydraulikhammer oder andere Anbaugeräte in wenigen Sekunden und mit hohem Sicherheitsstandard von einer Fahrerkabine aus z.B. an einem Ausleger eines Baggers an- bzw. abgekuppelt werden.

Aus der EP 3 922 774 A1 ist ein gattungsgemäßer Schnellwechsler bekannt. Dieser enthält einen an einem Ausleger einer Baggers befestigbaren Träger, der an einer Seite erste Aufnahmen mit einem zwischen einer Lösestellung und einer Verriegelungsstellung bewegbaren Verriegelungseinrichtung zur Halterung eines an einem Anbaugerät vorgesehenen ersten Kopplungselements und an der anderen Seite zweite Aufnahmen zur Halterung eines vom ersten Kopplungselement beabstandeten zweiten Kopplungselements aufweist. Um ein Herabfallen der Anbaugeräte und eine dadurch mögliche Gefährdung von Personen bei einer unbeabsichtigten Bewegung der Verriegelungseinrichtung in eine Lösestellung zu verhindern, ist an dem Träger eine Fangeinrichtung mit zwei voneinander beabstandeten Fanghaken vorgesehen. Durch die von der Verriegelungseinrichtung völlig unabhängigen Fanghaken kann ein Anbaugerät auch bei eventuellen Fehlbedienungen der Verriegelungseinrichtung sicher aufgefangen und ein Herabfallen verhindert werden. Über ein Steuerelement an den Fanghaken sind diese von einem der beiden Kopplungselemente zwischen einer heruntergeklappten Wechsel- und Fangstellung und einer hochgeklappten Sicherungsstellung verschwenkbar. Durch das Steuerelement kann so eine vom Anbaugerät initiierte Bewegung des Fanghakens erfolgen. Es sind keine separaten Antriebe erforderlich. Bei dem bekannten Schnellwechsler erfolgt die Bewegung der Fanghaken in die heruntergeklappte Wechsel- und Fangstellung alleine durch die Schwerkraft aufgrund ihres Eigengewichts. Bei bestimmten Stellungen des Schnellwechslers kann dies jedoch unter Umständen zu Problemen beim Wechselvorgang führen.

Bei einem in der US 2020/0399853 A1 offenbarten Schnellwechsler dient die schwenkbare Anordnung des Fanghakens nicht zum Schwenken des Fanghakens zwischen einer heruntergeklappten Wechsel- und Fangstellung und einer hochgeklappten Sicherungsstellung, sondern durch die Verschwenkbarkeit des Fanghakens soll gewährleistet werden, dass der Fanghaken im Falle auf den Fanghaken wirkender Stöße aus seiner die Sicherungsstellung bildenden Ausgangsstellung nach oben ausweichen kann. Dadurch sollen unsachgemäße Belastungen nicht unmittelbar auf den Träger des Schnellwechslers übertragen und dieser somit vor unerwünschten Beschädigungen geschützt werden.

Ein weiterer Schnellwechsler mit einem Träger, einer Verriegelungseinrichtung und einem Fangmechanismus mit einer Rückstellung ist aus der US 6 058 633 A bekannt.

Aufgabe der Erfindung ist es, einen kompakt aufgebauten Schnellwechsler der eingangs genannten Art und ein Schnellwechselsystem mit einem derartigen Schnellwechsler zu schaffen, die unabhängig von der Stellung des Schnellwechslers einen sicheren Wechselvorgang mit hoher Präzision und verbesserter Handhabung ermöglichen.

Diese Aufgabe wird durch einen Schnellwechsler mit den Merkmalen des Anspruchs 1 und durch ein Schnellwechselsystem mit den Merkmalen des Anspruchs 9 gelöst. Zweckmäßige Ausgestaltungen und vorteilhafte Weiterbildungen der Erfindung sind in den Unteransprüchen angegeben.

Bei dem erfindungsgemäßen Schnellwechsler weist die Fangeinrichtung mindestens einen am Träger schwenkbar angeordneten Fanghaken auf, an dem ein Steuerelement für ein von der Verriegelungseinrichtung unabhängiges Verschwenken des Fanghakens zwischen einer heruntergeklappten Wechsel- und Fangstellung und einer hochgeklappten Sicherungsstellung angeordnet ist. Durch eine am Träger angeordnete Rückstelleinrichtung wird der Fanghaken in seine heruntergeklappte Wechsel- und Fangstellung gedrückt. Dadurch kann sichergestellt werden, dass sich der Fanghaken bei noch nicht angekoppelten Anbaugerät unabhängig von der Stellung des Schnellwechslers sicher in seiner heruntergeklappten Wechsel- und Fangstellung befindet. In der heruntergeklappten Wechsel- und Fangstellung des Fanghakens kann ein Anbaugerät durch entsprechendes Absetzen auf dem Boden gewechselt und bei Bedarf durch Eingriff des Kopplungselements an dem Fanghaken in einer Fangposition aufgefangen und dadurch am Schnellwechsler gehalten werden, während der Fanghaken in der hochgeklappten Sicherungsstellung die Aufnahme für ein Kopplungselement umschließt. Durch das Einklappen des Fanghakens ist eine besonders kompakte Bauweise erreichbar, wodurch die Gefahr eventueller Kollisionen mit einem Anbaugerät erheblich reduziert werden kann. Die Steuerung der Schwenkbewegung des Fanghakens erfolgt unabhängig von der Betätigung der Verriegelungseinrichtung durch ein Kopplungselement an dem am Schnellwechsler anzukuppelnden Anbaugerät. Es sind keine zusätzlichen Steuer- oder Betätigungseinrichtungen erforderlich. Ein durch unsachgemäße Anwendung beschädigter Fanghaken kann außerdem auch ohne Austausch des gesamten Trägers einfach ausgewechselt werden. Es muss nicht der gesamte Träger demontiert oder gewechselt werden. Die Rückstelleinrichtung umfasst ein dem Fanghaken zugeordnetes und durch eine Druckfeder vorgespanntes bolzenförmiges Druckelement. Das bolzenförmige Druckelement ist in einer Bohrung des Trägers angeordnet und drückt mit seinem oberen Ende gegen die Unterseite des Steuerelements am Fanghaken.

Das Steuerelement zur Bewegung des Fanghakens zwischen der heruntergeklappten Wechsel- und Fangstellung und der hochgeklappten Sicherungsstellung kann zweckmäßigerweise als ein von dem Fanghaken vorstehender, im Bereich der zweiten Aufnahmen angeordneter nasenförmiger Mitnehmer ausgebildet sein.

Die Fangeinrichtung kann einen oder mehrere voneinander getrennte oder miteinander verbundene Fanghaken umfassen. In einer besonders zweckmäßigen Ausführung kann die Fangeinrichtung zwei an dem Träger voneinander beabstandet angeordnete Fanghaken aufweisen. Die Fanghaken sind vorzugsweise an den zweiten Aufnahmen des Trägers angeordnet. Die Fanghaken können gemeinsam oder unabhängig voneinander betätigbar sein.

In einer stabilen Bauweise können die Fanghaken in mittigen Schlitzen zweier vom Träger nach hinten vorstehender Anschlussstege um Querachsen schwenkbar angeordnet sein.

Eine besonders sichere Halterung kann dadurch erreicht werden, dass der Fanghaken das Kopplungselement halbkreisförmig umschließt. Der Fanghaken kann an seiner Unterseite eine Anschlagfläche zur Anlage an einer stirnseitigen Anlagefläche des Trägers aufweisen.

Die Erfindung betrifft außerdem eine Schnellwechseleinrichtung, die einen vorstehend beschriebenen Schnellwechsler und einem mit dem Schnellwechsler kuppelbaren Adapter umfasst.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: ein Schnellwechselsystem mit einem Schnellwechsler und einem Adapter in einer Schnittansicht;
- **Figur 2**: den Schnellwechsler von Figur 1 in einer Perspektive;
- **Figur 3**: eine Schnittansicht des Schnellwechslers von Figur 2 mit der Fangeinrichtung in einer geöffneten Wechselstellung und;
- **Figur 4**: eine Schnittansicht des Schnellwechslers von Figur 2 mit der Fangeinrichtung in einer geschlossenen Fangstellung.

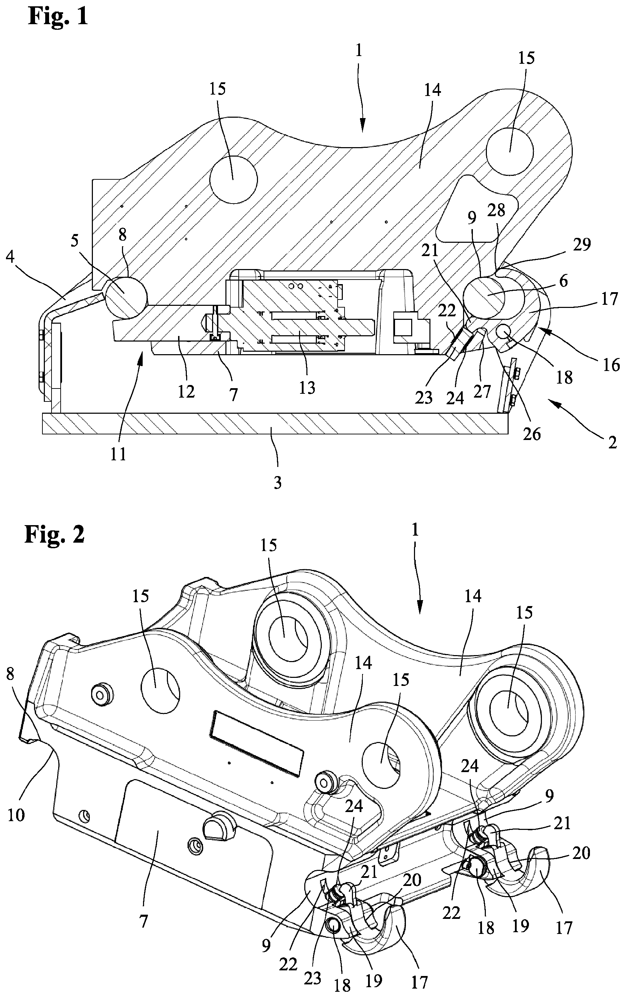

In Figur 1 ist ein aus einem Schnellwechsler 1 und einem zugehörigen Adapter 2 bestehendes Schnellwechselsystem zum einfachen und bequemen Wechseln von unterschiedlichen Anbaugeräten an Baumaschinen, insbesondere Baggern, in einer Schnittansicht gezeigt. Mit einem derartigen Schnellwechselsystem können z.B. Schwenklöffel, Greifer, Scheren, Magnete, Verdichter, Hydraulikhammer oder andere mechanische bzw. hydraulische Anbaugeräte einfach und bequem von einer Fahrerkabine aus an einem Ausleger oder einem anderen Anbauteil eines Baggers oder anderen Baufahrzeugs an- bzw. abgekuppelt werden.

Der an einem Anbaugerät befestigbare Adapter 2 enthält eine Grundplatte 3 und zwei zueinander parallele Seitenwangen 4, zwischen denen ein erstes bolzenförmiges Kopplungselement 5 und ein davon in einem vorgegeben Abstand beabstandetes zweites bolzenförmiges Kopplungselement 6 zur lösbaren Verbindung mit dem Schnellwechsler 1 angeordnet sind. Die beiden bolzenförmigen Kopplungselemente 5 und 6 können in entsprechende Bohrungen in den Seitenwangen 4 eingesteckt und dort fixiert sein.

Der auch in Figur 2 in einer Perspektive dargestellte Schnellwechsler 1 enthält einen als Schweißkonstruktion oder als Gußteil ausgeführten Träger 7, der an einer Seite nach unten offene erste Aufnahmen 8 zur Aufnahme und Halterung des ersten bolzenförmigen Kopplungselements 5 und an der anderen Seite nach vorne offene zweite Aufnahmen 9 zur Aufnahme und Halterung des zweiten bolzenförmigen Kopplungselements 6 aufweist.

Bei dem gezeigten Ausführungsbeispiel enthält der Schnellwechsler 1 an der einen Seite des Trägers 7 zwei voneinander beabstandete Aufnahmen 8 für das erste Kopplungselement 5 und auf der anderen Seite zwei Aufnahmen 9 für das zweite Kopplungselement 6 Die nach unten offenen ersten Aufnahmen 8 weisen eine gekrümmte untere Anlagefläche 10 zur Anlage des ersten bolzenförmigen Kopplungselements 5 auf. Die nach vorne offenen zweiten Aufnahmen 9 sind klauen- oder gabelförmig ausgeführt.

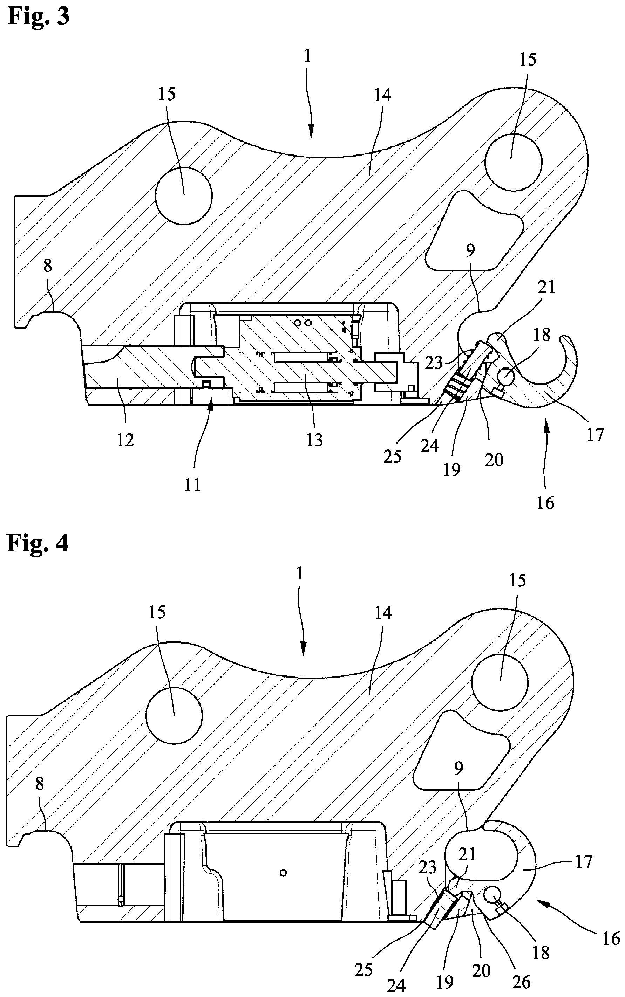

An den beiden ersten Aufnahmen 8 ist eine in Figur 1 erkennbare Verriegelungseinrichtung 11 zur verriegelbaren Halterung des ersten Kopplungselements 5 am Träger 7 vorgesehen. Die zwischen einer Löse- und Verriegelungsstellung bewegbare Verriegelungseinrichtung 11 umfasst bei der gezeigten Ausführung zwei bolzenförmige Verriegelungselemente 12, die innerhalb des Trägers 7 verschiebbar geführt und durch einen Zylinder 13 zwischen einer in Figur 1 gezeigten ausgefahrenen Verriegelungsstellung und einer in Figur 3 gezeigten eingefahrenen Lösestellung zum Lösen oder Ankoppeln des Adapters 2 bzw. eines Anbaugeräts bewegbar sind. In der ausgefahrenen Verriegelungsstellung werden die nach unten offenen ersten Aufnahmen 8 von den in Führungsbohrungen im Träger 7 verschiebbar angeordneten Verriegelungselementen 12 an der Unterseite geschlossen, so dass das erste bolzenförmige Kopplungselement 5 von den bolzenförmigen Verriegelungselementen 12 untergriffen wird.

Der Träger 7 enthält an seiner Oberseite zwei zueinander parallele Seitenteile 14, in denen durchgängige Öffnungen 15 für nicht dargestellte Befestigungsbolzen zur Befestigung des Schnellwechslers 1 an einem Ausleger eines Baggers oder einem Anschlussteil eines anderen Baufahrzeugs vorgesehen sind.

Um mit Hilfe des Schnellwechslers 1 ein Anbaugerät anzukuppeln, wird der in der Regel an einem Ausleger eines Baggers angeordnete Schnellwechsler 1 zunächst so bewegt, dass das am Adapter 2 oder direkt an dem Anbaugerät angeordnete zweite Kopplungselement 6 in die klauen- bzw. gabelförmigen Aufnahmen 9 auf der einen Seite des Schnellwechslers 1 eingefahren wird. Dann wird der Schnellwechsler 1 mit noch zurückgezogenen Verriegelungselementen 12 um das zweite bolzenförmige Kopplungselement 6 so geschwenkt, dass das erste Kopplungselement 5 am Adapter oder Anbaugerät zur Anlage an den Anlageflächen 10 der nach unten offenen Aufnahmen 8 auf der anderen Seite des Schnellwechslers 1 gelangt. Anschließend können die in Führungsbohrungen im Träger 7 des Schnellwechslers 1 verschiebbar angeordneten Verriegelungselemente 12 hydraulisch ausgefahren werden, so dass das erste bolzenförmige Kopplungselement 5 von den beiden bolzenförmigen Verriegelungselementen 12 an dem Schnellwechsler 1 untergriffen und das Anbaugerät somit an dem Schnellwechsler 1 gehalten wird.

Um zu verhindern, dass sich ein an den Schnellwechsler 1 angekoppeltes Anbaugerät bei einer durch Fehlbedienung oder Störungen bedingten, unbeabsichtigten Lösebewegung des Verriegelungselements von dem Schnellwechsler löst und dann evtl. in einer angehobenen Stellung des Schnellwechslers 1 herabfällt, ist an dem Träger 7 eine zusätzlich Fangeinrichtung 16 vorgesehen. Die Fangeinrichtung 16 ist zum Umgreifen des am Adapter 2 oder Anbaugerät angeordneten und mit den ersten Aufnahmen 8 in Eingriff gelangenden Kopplungselements 6 ausgeführt. Die Fangeinrichtung 16 ist derart ausgebildet, dass ein Anbaugerät bei einem unbeabsichtigten Lösen aus der Kupplungsposition durch Eingriff des Kopplungselements 6 an der Fangeinrichtung 16 in einer Fangposition aufgefangen und dadurch am Schnellwechsler gehalten wird.

Bei der gezeigten Ausführung umfasst die Fangeinrichtung 16 zwei separate Fanghaken 17, die nicht starr an dem Träger 2 des Schnellwechslers 1 angeordnet, sondern über eine Art Scharnier um eine Querachse 18 schwenkbar an dem Träger 1 angelenkt sind. Die beiden Fanghaken 17 sind an den beiden Aufnahmen 9 angeordnet und derart ausgebildet, dass sie ein Kopplungselement 6 am Adapter 2 oder einem Anbaugerät umgreifen und das Anbaugerät bei einer unbeabsichtigten Bewegung der Verriegelungselemente 12 in eine Lösestellung durch Eingriff des Kopplungselements 6 an den Fanghaken 16 in einer Fangposition auffangen können. Durch die schwenkbare Anordnung können sich die Fanghaken 17 zwischen einer in Figur 3 gezeigten, den Wechselvorgang ermöglichenden heruntergeklappten Wechsel- und Fangstellung und einer in Figur 4 gezeigten, die Aufnahme 8 umschließenden hochgeklappten Sicherungsstellung bewegen. Bei der in Figur 4 gezeigten hochgeklappten Sicherungsstellung werden die beiden Aufnahmen 8 von den Fanghaken 17 vollständig geschlossen.

Wie besonders aus Figur 2 ersichtlich ist, enthält der Träger 7 zwei nach hinten vorstehende, voneinander beabstandete Anschlussstege 19, an denen die beiden Fanghaken 17 um jeweils eine Querachse 18 schwenkbar angelenkt sind. Die am Träger 7 unterhalb der Aufnahmen 9 nach hinten vorstehend angeordneten Anschlussstege 19 enthalten jeweils einen mittigen Schlitz 20, in dem jeweils ein Fanghaken 17 schwenkbar angeordnet ist.

In den Figuren 3 und 4 ist besonders gut erkennbar, dass an den Fanghaken 17 ferner ein zur Betätigung durch das Kopplungselement 6 ausgebildetes Steuerelement 21 vorgesehen ist. Das als nasenförmiger Mitnehmer ausgeführte Steuerelement 21 ist derart ausgebildet, dass es in der heruntergeklappten Stellung des Fanghakens 17 gegenüber der Innenkontur der Aufnahme 8 nach innen vorsteht und in der hochgeklappten Sicherungsstellung des Fanghakens 16 in eine in Figur 2 gezeigte nutförmige Vertiefung 22 an der Aufnahme 9 mit der deren Innenkontur abschließend eingreift. Über das Steuerelement 21 kann der Fanghaken 17 durch das Kopplungselement 6 beim Eingreifen in die Aufnahmen 9 aus der in Figur 3 gezeigten heruntergeklappten Wechsel- und Fangstellung in die in Figur 4 gezeigte hochgeklappten Sicherungsstellung bewegt werden. Das Steuerelement 21 sorgt außerdem dafür, dass sich der Fanghaken 17 nur dann in die einen Wechselvorgang ermöglichende Wechsel- und Fangstellung bewegen lässt, wenn das Kopplungselement 6 korrekt in den Fanghaken 17 positioniert ist. Die beiden Fanghaken 17 werden außerdem durch eine Rückstelleinrichtung in die heruntergeklappte Wechsel- und Fangstellung gedrückt.

Bei der gezeigten Ausführung ist die Rückstelleinrichtung als Federanordnung ausgeführt. Sie weist jeweils ein jedem Fanghaken 17 zugeordnetes und durch eine Druckfeder 23 vorgespanntes bolzenförmiges Druckelement 24 auf, durch welches der Fanghaken 17 in seine heruntergeklappte Wechsel- und Fangstellung gedrückt wird. Das bolzenförmige Druckelement 24 ist in einer entsprechenden schrägen Bohrung 25 im Träger 7 angeordnet und drückt mit seinem oberen Ende gegen die Unterseite des nasenförmigen Steuerelements 21. Die Rückstelleinrichtung kann aber auch anders ausgeführt sein.

Die Fanghaken 17 sind derart ausgestaltet, dass sie das Kopplungselement 6 mit etwa 180° halbkreisförmig umschließen. Dadurch kann eine besonders sichere Halterung in jeder Stellung des Schnellwechslers 1 erreicht werden. In der hochgeklappten Sicherungsstellung des Fanghakens 17 wird dabei die Aufnahme 9 nach hinten vollständig von dem Fanghaken 17 umschlossen. In dieser hochgeklappten Sicherungsstellung steht der Fanghaken 17 auch nicht besonders weit gegenüber dem Träger 7 vor, so dass sich eine kompakte Bauweise ergibt und die Gefahr eventueller Kollisionen mit einem Anbaugerät erheblich reduziert werden kann. Auch wenn das Kopplungselement 6 aus der Aufnahme 9 ausrückt und von dem Fanghaken 17 aufgefangen wird, ist durch die Form des Fanghakens 17 eine sichere Halterung gewährleistet.

Wie aus Figur 1 hervorgeht, weist der Fanghaken 17 an seiner Unterseite eine Anschlagfläche 26 zur Anlage an einer stirnseitigen Anlagefläche 27 des Trägers 7 unterhalb der Aufnahme 9 auf. In seiner nach unten geschwenkten Ausklappstellung liegt der Fanghaken 17 mit seiner Anschlagfläche 26 an den Anlagefläche 27 des Trägers 7 an, so dass der Fanghaken 17 in dieser unteren Wechsel- und Fangstellung gehalten wird. In seiner nach oben geklappten Sicherungsstellung liegt der Fanghaken 17 mit einer oberen Anlagefläche 28 an einer entsprechenden Gegenfläche 29 des Trägers 7 an.

Die vorstehend beschriebene Fangeinrichtung 16 stellt eine zusätzliche Sicherungseinrichtung dar, durch die ein Anbaugerät auch bei einem unbeabsichtigten Lösen der Verriegelung sicher gefangen und gehalten werden kann. Die Fangeinrichtung 16 ist unabhängig von der Verriegelungseinrichtung 11 und mit dieser nicht gekoppelt.

### Bezugszeichenliste

- 1: Schnellwechsler
- 2: Adapter
- 3: Grundplatte
- 4: Seitenwange
- 5: Erstes Kopplungselement
- 6: Zweites Kopplungselement
- 7: Träger
- 8: Erste Aufnahme
- 9: Zweite Aufnahme
- 10: Anlagefläche
- 11: Verriegelungseinrichtung
- 12: Verriegelungselement
- 13: Zylinder
- 14: Seitenteil
- 15: Öffnung
- 16: Fangeinrichtung
- 17: Fanghaken
- 18: Querachse
- 19: Anschlusssteg
- 20: Schlitz
- 21: Steuerelement
- 22: Vertiefung
- 23: Druckfeder
- 24: Druckelement
- 24: Steuerelement
- 25: Bohrung
- 26: Anschlagfläche
- 27: Anlagefläche
- 28: Obere Anlagefläche
- 29: Gegenfläche

## Patentansprüche

1. Schnellwechsler (1) zum Wechseln von Anbaugeräten an einer Baumaschine, der einen Träger (7), an der einen Seite des Trägers (7) angeordnete erste Aufnahmen (8) für ein erstes Kopplungselement (5), an der anderen Seite des Trägers (7) angeordnete zweite Aufnahmen (9) für ein zweites Kopplungselement (6), eine den ersten Aufnahmen (8) zugeordnete, zwischen einer Löse- und Verriegelungsstellung bewegbare Verriegelungseinrichtung (11) und eine am Träger (7) angeordnete Fangeinrichtung (16) mit mindestens einen am Träger (7) schwenkbar angeordneten Fanghaken (17) zum Auffangen des Anbaugeräts enthält, wobei an dem Fanghaken (17) ein Steuerelement (21) für ein von Verriegelungseinrichtung (11) unabhängiges Verschwenken des Fanghakens (17) zwischen einer heruntergeklappten Wechsel- und Fangstellung und einer hochgeklappten Sicherungsstellung angeordnet ist, **dadurch gekennzeichnet, dass** der Fanghaken (17) durch eine Rückstelleinrichtung (23, 24) in seine heruntergeklappte Wechsel- und Fangstellung gedrückt wird, wobei die Rückstelleinrichtung (23, 24) ein dem Fanghaken (17) zugeordnetes und durch eine Druckfeder (23) vorgespanntes bolzenförmiges Druckelement (24) umfasst, das in einer Bohrung (25) des Trägers (7) angeordnet ist und mit seinem oberen Ende gegen die Unterseite des Steuerelements (21) am Fanghaken (17) drückt.

2. Schnellwechsler (1) nach Anspruch 1, **dadurch gekennzeichnet, dass** das Steuerelement (21) als ein von dem Fanghaken (17) vorstehender, im Bereich der zweiten Aufnahmen (9) angeordneter nasenförmiger Mitnehmer ausgebildet ist.

3. Schnellwechsler (1) nach Anspruch 1 oder 2, **dadurch gekennzeichnet, dass** die Fangeinrichtung (16) zwei an dem Träger (7) voneinander beabstandet angeordnete Fanghaken (17) aufweist.

4. Schnellwechsler (1) nach Anspruch 3, **dadurch gekennzeichnet, dass** die Fanghaken (17) an den zweiten Aufnahmen (9) des Trägers (7) angeordnet sind.

5. Schnellwechsler (1) nach Anspruch 3 oder 4, **dadurch gekennzeichnet, dass** die Fanghaken (17) in mittigen Schlitzen (20) zweier vom Träger (7) nach hinten vorstehender Anschlussstege (19) um Querachsen (18) schwenkbar angeordnet sind.

6. Schnellwechsler (1) nach einem der Ansprüche 3 bis 5, **dadurch gekennzeichnet, dass** an den zweiten Aufnahmen (9) nutförmige Vertiefungen (22) zur Aufnahme der Steuerelemente (21) in der hochgeklappten Sicherungsstellung der Fanghaken (17) vorgesehen sind.

7. Schnellwechsler (1) nach einem der Ansprüche 1 bis 6, **dadurch gekennzeichnet, dass** der Fanghaken (17) derart ausgebildet ist, dass er das Kopplungselement (6) halbkreisförmig umschließt.

8. Schnellwechsler (1) nach einem der Ansprüche 1 bis 7, **dadurch gekennzeichnet, dass** der Fanghaken (17) an seiner Unterseite eine Anschlagfläche (26) zur Anlage an einer Anlagefläche (27) des Trägers (7) aufweist.

9. Schnellwechselsystem mit einem Schnellwechsler (1) und einem mit dem Schnellwechsler (1) kuppelbaren Adapter (2), **dadurch gekennzeichnet, dass** der Schnellwechsler (1) nach einem der Ansprüche 1 bis 8 ausgebildet ist.

## Claims

1. Quick coupler (1) for changing attachments on a construction machine, the quick coupler comprising a carrier (7), first recesses (8) for a first coupling element (5) which are arranged on one side of the carrier (7), second recesses (9) for a second coupling element (6) which are arranged on the other side of the carrier (7), a locking device (11) associated with the first recesses (8) and movable between a release and locking position, and a catch device (16) which is arranged on the carrier (7) and comprises at least one catch hook (17) pivotably arranged on the carrier (7) for catching the attachment, a control element (21) being arranged on the catch hook (17) for pivoting the catch hook (17) independently of the locking device (11) between a folded-down changing and catch position and a folded-up safety position, **characterized in that** the catch hook (17) is pressed into its folded-down changing and catch position by a return device (23, 24), the return device (23, 24) comprising a bolt-shaped pressure element (24) associated with the catch hook (17) and pre-loaded by a compression spring (23), which pressure element is arranged in a bore (25) of the carrier (7) and presses with its upper end against the underside of the control element (21) on the catch hook (17).

2. Quick coupler (1) according to claim 1, **characterized in that** the control element (21) is in the form of a nose-like driver which projects from the catch hook (17) and is arranged in the region of the second recesses (9).

3. Quick coupler (1) according to claim 1 or claim 2, **characterized in that** the catch device (16) has two catch hooks (17) arranged spaced apart from each other on the carrier (7).

4. Quick coupler (1) according to claim 3, **characterized in that** the catch hooks (17) are arranged on the second recesses (9) of the carrier (7).

5. Quick coupler (1) according to claim 3 or claim 4, **characterized in that** the catch hooks (17) are arranged in central slots (20) of two connecting projections (19), projecting rearward from the carrier (7), so as to be pivotable about transverse pins (18).

6. Quick coupler (1) according to any of claims 3 to 5, **characterized in that** groove-shaped recesses (22) for receiving the control elements (21) in the folded-up safety position of the catch hooks (17) are provided in the second recesses (9).

7. Quick coupler (1) according to any of claims 1 to 6, **characterized in that** the catch hook (17) is designed in such a way that it surrounds the coupling element (6) in a semicircular shape.

8. Quick coupler (1) according to any of claims 1 to 7, **characterized in that** the catch hook (17) has a stop surface (26) on its underside for abutting a contact surface (27) of the carrier (7).

9. Quick-change system comprising a quick coupler (1) and an adapter (2) that can be coupled to the quick coupler (1), **characterized in that** the quick coupler (1) is designed according to any of claims 1 to 8.

## Revendications

1. Changeur rapide (1) pour le changement d'outils portés sur une machine de chantier, comprenant un support (7), de premiers logements (8) disposés sur un côté du support (7) pour un premier élément d'accouplement (5), de seconds logements (9) disposés sur l'autre côté du support (7) pour un second élément d'accouplement (6), un dispositif de verrouillage (11) associé aux premiers logements (8) et mobile entre une position de libération et une position de verrouillage, et un dispositif de saisie (16) disposé sur le support (7) comportant au moins un crochet de saisie (17) disposé de manière pivotante sur le support (7) pour la saisie de l'outil porté, dans lequel un élément de commande (21) est disposé sur le crochet de saisie (17) pour un pivotement du crochet de saisie (17), indépendant du dispositif de verrouillage (11), entre une position de changement et de saisie rabattue vers le bas et une position de sécurité relevée,
**caractérisé en ce que** le crochet de saisie (17) est pressé par un dispositif de rappel (23, 24) dans sa position de changement et de saisie rabattue vers le bas, dans lequel le dispositif de rappel (23, 24) comprend un élément de pression (24) en forme de boulon associé au crochet de saisie (17) et précontraint par un ressort de pression (23), lequel élément de pression est disposé dans un alésage (25) du support (7) et presse, avec son extrémité supérieure, contre le côté inférieur de l'élément de commande (21) sur le crochet de saisie (17).

2. Changeur rapide (1) selon la revendication 1, **caractérisé en ce que** l'élément de commande (21) est réalisé sous forme d'entraînement en forme de toc faisant saillie du crochet de saisie (17) et disposé dans la zone des seconds logements (9).

3. Changeur rapide (1) selon la revendication 1 ou 2, **caractérisé en ce que** le dispositif de saisie (16) présente deux crochets de saisie (17) disposés à une certaine distance l'un de l'autre sur le support (7).

4. Changeur rapide (1) selon la revendication 3, **caractérisé en ce que** les crochets de saisie (17) sont disposés sur les seconds logements (9) du support (7).

5. Changeur rapide (1) selon la revendication 3 ou 4, **caractérisé en ce que** les crochets de saisie (17) sont disposés de manière à pouvoir pivoter autour d'axes transversaux (18) dans des fentes (20) centrales de deux barrettes de liaison (19) faisant saillie vers l'arrière du support (7).

6. Changeur rapide (1) selon l'une des revendications 3 à 5,
**caractérisé en ce que** des renfoncements (22) en forme de rainures sont prévus sur les seconds logements (9) pour la réception des éléments de commande (21) dans la position de sécurité relevée des crochets de saisie (17).

7. Changeur rapide (1) selon l'une des revendications 1 à 6,
**caractérisé en ce que** le crochet de saisie (17) est conçu de telle sorte qu'il entoure l'élément d'accouplement (6) en forme de demi-cercle.

8. Changeur rapide (1) selon l'une des revendications 1 à 7,
**caractérisé en ce que** le crochet de saisie (17) présente sur son côté inférieur une surface de butée (26) destinée à venir en appui sur une surface d'appui (27) du support (7).

9. Système à changeur rapide comportant un changeur rapide (1) et un adaptateur (2) pouvant s'accoupler au changeur rapide (1), **caractérisé en ce que** le changeur rapide (1) est conçu selon l'une des revendications 1 à 8.
